# EUROPEAN PATENT APPLICATION

(11) **EP 4 711 946 A1**
(43) Date of publication of application: **18.03.2026**
(21) Application number: 25201523.5
(22) Date of filing: 11.09.2025
(51) Int. Cl.: G06F 16/25, G06F 16/21

(54) **DATA TRANSFORMATION IN CLOUD-BASED DATA WAREHOUSING ENVIRONMENT**

(30) Priority: 17.09.2024 US 202463695774 P; 02.12.2024 US 202463727154 P; 18.08.2025 US 202519302308
(71) Applicant: SAP SE, 69190 Walldorf (DE)
(72) Inventor: Radhakrishnan, Sailesh, Walldorf (DE); Maier, Florian, Walldorf (DE); Uhle, Michael te, Walldorf (DE); Schoenau, Peter, Walldorf (DE); Gamidi, Nagavijay, Walldorf (DE); Nagel, Klaus, Walldorf (DE)
(74) Representative: Müller-Boré & Partner Patentanwälte PartG mbB

(57) **Abstract**

A solution for transforming and managing data in a data lake environment is disclosed. A definition of a transformation flow is received via a graphical user interface. The transformation flow specifies operations to transform source data into target data stored in a first format object storage. A virtual procedure corresponding to the transformation flow is generated and stored in an in-memory cloud database. Then the virtual procedure is executed, causing retrieval of metadata from the first format object storage and triggering a transformation job on a computing cluster. The transformation job reads the source data from the first format object storage, applies one or more transformations specified in the definition of the transformation flow, and writes results to target data in the first format object storage.

## Description

### CROSS-RELATION TO RELATED APPLICATIONS

This application claims priority to U.S. Provisional Application No. 63/695,774, filed September 17, 2024, entitled "DATA PLATFORM," and U.S. Provisional Application No. 63/727,154, filed December 2, 2024, entitled "EMBEDDED DATA LAKE CAPABILITIES," both hereby incorporated herein by reference in its entirety.

### TECHNICAL FIELD

The present disclosure relates to data warehousing environments, specifically to data ingestions in cloud-based data warehousing environments.

### BACKGROUND

A data warehousing environment is a specialized system designed to store, manage, and analyze large volumes of structured and, in some cases, semi-structured data. It serves as a central repository where data from various sources is consolidated, transformed, and made available for querying and reporting. Data warehousing environments often are used for supporting business intelligence (BI), analytics, and decision-making processes within organizations.

### BRIEF DESCRIPTION OF THE DRAWINGS

Figure 1 is a block diagram illustrating a system for data transformation, in accordance with an example embodiment.
Figure 2 is a screen capture of a first screen of the transformation flow editor, in accordance with an example embodiment.
Figure 3 is a screen capture of a second screen of a transformation flow editor, in accordance with an example embodiment.
Figure 4 is a screen capture of a third screen of a transformation flow editor, in accordance with an example embodiment.
Figure 5 is a flow diagram illustrating a method for data transformation, in accordance with an example embodiment.
Figure 6 shows a block diagram showing one example of a software architecture for a computing device.
Figure 7 shows a block diagram of a machine in the example form of a computer system within which instructions may be executed for causing the machine to perform any one or more of the methodologies discussed herein.

### DETAILED DESCRIPTION

One example of a data warehousing environment is a cloud-based data management solution to help organizations create a unified and intelligent data layer across their entire data landscape. It serves as a foundation for a "data fabric," which is a way to seamlessly connect, manage, and make sense of data from various sources-whether those sources are internal systems, third-party platforms, or on-premise databases.

One of the capabilities of a data warehousing environment is its ability to provide direct access to distributed data while preserving its original business meaning. Rather than simply moving raw data around, it maintains important elements like business logic, semantics, and relationships. This is particularly valuable for organizations that want to ensure consistency and governance across departments, enabling them to analyze and act on data in context.

The platform supports both data replication and federated access, allowing companies to choose whether to move the data or access it in real time from where it resides. It also features a user-friendly interface for data modeling and transformation, making it accessible to both technical users and business analysts. This helps bridge the gap between IT and business teams, making it easier to collaborate on data initiatives.

Security, governance, and regulatory compliance are built into the platform. Users can set controls on how data is accessed and shared, ensuring sensitive information remains protected while still enabling secure collaboration internally or with external partners.

One technical issue that arises with a data warehousing environment derives from where it stores data. Data from the various different sources is ingested and stored in an in-memory database. An in-memory database (also known as an in-memory database management system) is a type of database management system that primarily relies on main memory for computer data storage. It is contrasted with database management systems that employ a disk storage mechanism. In-memory databases are traditionally faster than disk storage databases because disk access is slower than memory access. One example in-memory database is the HANA^{®} database from SAP SE, of Walldorf, Germany. HANA also supports a disk store, which can also be adopted by the data warehousing environment. The result is that the data warehousing environment has three storage layers: (1) HANA in-memory, (2) HANA Disk, and (3) File-Storage (Hyperscaler).

While storing data in an in-memory database results in very quick data access operations, maintaining large amounts of data in an in-memory database can be difficult to manage and expensive. Other types of long-term storage provide better scalability and are less expensive, such as using hyperscalers. Hyperscalers are large-scale cloud service providers that offer highly scalable and distributed computing, storage, and networking infrastructure. These companies operate massive data centers and provide cloud-based services to businesses and individuals, enabling them to access computing resources on demand. Hyperscalers are known for their ability to scale resources dynamically, allowing users to handle workloads of varying sizes efficiently and cost-effectively.

The term "hyperscaler" is derived from the concept of "hyperscale computing," which refers to the ability to scale computing infrastructure seamlessly to meet the demands of large-scale applications, such as big data analytics, artificial intelligence, machine learning, and enterprise-level workloads. Hyperscalers achieve this by leveraging advanced technologies, automation, and economies of scale to deliver reliable and flexible cloud services.

Examples of hyperscalers include Amazon Web Services (AWS), Microsoft Azure, Google Cloud Platform (GCP), and Alibaba Cloud. These providers offer a wide range of services, including virtual machines, object store, databases, networking, analytics, and machine learning tools. Hyperscalers also provide global infrastructure, with data centers located in multiple regions, ensuring high availability and low latency for their customers.

In an example embodiment, a data warehousing environment, or a similar architecture, is extended to permit data storage in either an in-memory database or a Lakehouse architecture, which leverages one or more hyperscalers for the underlying storage. More specifically, a single artifact is defined in a data warehousing environment that stores data in either the in-memory database or the Lakehouse architecture, and does so in a storage-agnostic manner.

The Lakehouse architecture includes mechanisms for schema enforcement and evolution, enabling users to define and modify data schemas as needed while maintaining data quality and consistency. It supports both business intelligence and machine learning workloads, allowing organizations to perform a wide range of data analytics tasks on a single platform. The Lakehouse architecture separates storage from computing resources, allowing for independent scaling of each component, which provides flexibility in resource allocation and cost management.

Lakehouses often utilize open data formats, such as Apache Parquet, Delta Lake, or Apache Iceberg, to ensure compatibility with various data processing engines and tools. They also support real-time data ingestion and processing, enabling timely insights and decision-making. By integrating the capabilities of data lakes and data warehouses, a lakehouse architecture offers a comprehensive solution for managing large volumes of diverse data, supporting both batch and real-time processing, and enabling advanced analytics and machine learning applications.

An open table format is a data storage format designed to facilitate efficient data management and processing in distributed environments, particularly in data lake and lakehouse architectures. These formats are characterized by their ability to support multi-engine read and write operations, allowing different data processing engines to access and manipulate the data concurrently. Open table formats are typically used to store large datasets on object store systems, providing a flexible and scalable solution for data analytics.

SAP HANA Cloud from SAP, SE of Walldorf, Germany, is a cloud-based data platform that provides advanced data management and analytics capabilities. It is designed to handle large volumes of data in real-time, offering features such as in-memory computing, data integration, and processing for both transactional and analytical workloads.

Data lake files are digital files stored within a data lake, which is a centralized repository designed to store vast amounts of raw data in its native format. These files can include structured data, such as databases and tables; semi-structured data, like JSON or XML files; and unstructured data, such as text documents, images, and videos. Data lakes are designed to accommodate diverse data types and formats, allowing organizations to store data without the need for upfront structuring. This flexibility enables data scientists and analysts to perform various types of data processing and analysis, including big data analytics, machine learning, and real-time data processing, directly on the stored files, which may be stored in their native format without any added structure.

Hana Data Lake (HDL) Files from SAP, SE of Walldorf, Germany offer file and object store for structured, semi-structured, and unstructured data in HANA Cloud. HDL Files provide a single API that is independent of the infrastructure choice made by customers when provisioning the HANA Cloud service. This system is available to customers as a feature set within the HANA Cloud data lake product.

HDL Files are implemented by SAP's Storage Gateway. The Storage Gateway is deployed in all HDL clusters of HANA Cloud. Tables can be represented and stored in data lakes, such as HDL Files, using structured file formats. Open Table Format (OTF) is a category of structured file formats to represent tables, which provide guarantees to users, such as ACID transactions. Given the increasing interest of HDL File users in OTF tables, HDL Files are being enhanced to provide capabilities to manage OTF tables on top of their existing APIs to manage generic objects.

APIs may be introduced to allow users to organize OTF tables in an HDL Files catalog. They also provide client libraries for integration with Apache Spark. Apache Spark is an open-source, distributed computing system designed for processing and analyzing large-scale data efficiently. It provides a unified framework for handling a wide range of data processing tasks, including batch processing, real-time streaming, machine learning, graph processing, and interactive querying.

At its core, Spark is built on a distributed computing architecture that allows it to process data across multiple nodes in a cluster. It achieves high performance by leveraging in-memory computing, which minimizes the need to read and write data to disk during processing. This approach significantly speeds up data processing tasks compared to traditional disk-based systems like Hadoop MapReduce.

In the context of the data warehousing environment, Spark is used as a compute layer for advanced data processing and transformation tasks. It integrates seamlessly with HANA Data Lake Files (HDL Files) to enable complex workflows, such as data transformations, aggregations, and machine learning, on large datasets stored in the object store. Spark's ability to handle both structured and unstructured data makes it a versatile tool for modern data management and analytics.

Additionally, HDL Files is enhanced to support Delta Sharing, an open protocol for secure sharing of Delta tables. The idea behind Delta Sharing is that it allows one party-the data provider-to share access to specific datasets stored in cloud storage without actually moving or duplicating the data. This is done through a Delta Sharing Server, which acts as a secure gateway, managing who can access which data and ensuring that all permissions and authentication are enforced.

When another organization-the recipient-wants to access this data, they can use a wide range of tools to read it directly from the cloud. Because the data is accessed in place using secure, time-limited URLs, there is no need to download or copy files. This setup keeps data fresh and consistent, reduces data transfer costs, and ensures a high level of control over what is being shared.

Delta Sharing involves the creation and management of Delta shares. Delta shares are collections of objects, such as tables and table partitions, that are to be shared with additional recipients at different organizations.

In an example embodiment, the HDL Files, or similar, functionality is integrated with the data warehousing environment, or similar, functionality to provide a mechanism for users to elect whether to store data in the in-memory database or a hyperscaler. This is all performed in a seamless manner without the need to change user-facing processes, though the introduction of a storage-agnostic storage artifact, such as a table.

Another aspect of a Lakehouse architecture is a large, scalable, and inexpensive object store layer, which serves as an inbound, history-preserving, and fine-granularity storage. It also provides or enables tools to perform a wide variety of processes on top of the data to transform it into higher-quality datasets.

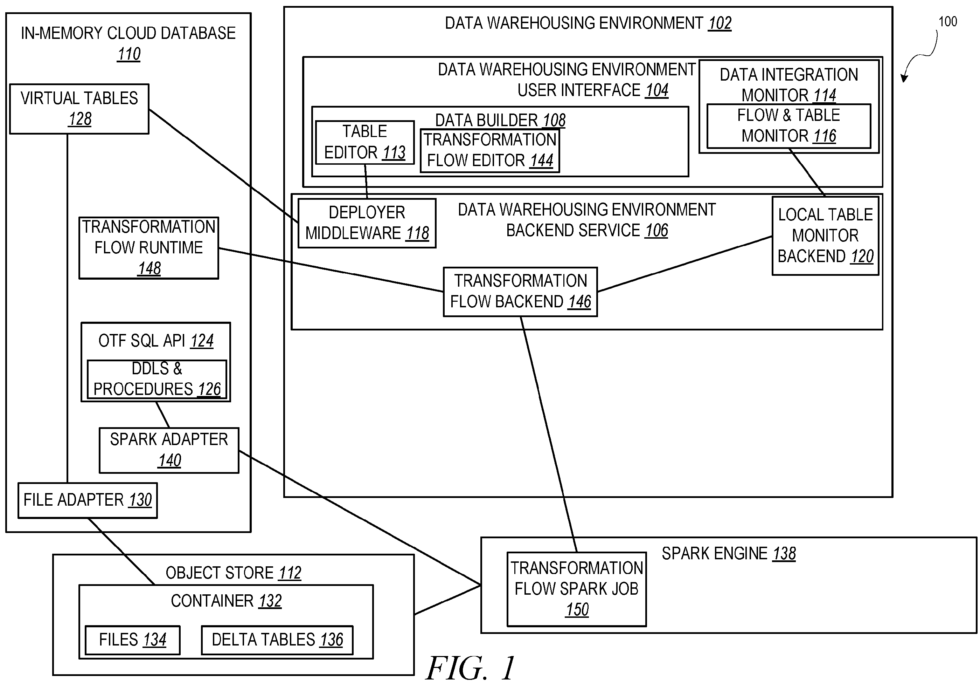

Figure 1 is a block diagram illustrating a system 100, in accordance with an example embodiment. The data warehousing environment 102 comprises a data warehousing environment user interface 104 and a data warehousing environment backend service 106. The data warehousing environment user interface 104 comprises a data builder 108. The data builder is designed to help users model, transform, and prepare data for analytics and reporting. It provides an intuitive interface that allows users to create and manage data models, define relationships between datasets, and perform data transformations. By offering both graphical and scripting-based approaches, the data builder 108 bridges the gap between technical users, such as data engineers, and business users, such as analysts.

The tool enables users to design data models that define how data is structured and related, supporting schemas optimized for analytics. It also allows for the transformation of raw data into meaningful datasets by applying business logic, performing calculations, and cleaning or enriching data. These transformations can be carried out using either graphical tools or scripting languages like Structured Query Language (SQL) or Python Script, making the tool accessible to a wide range of users.

The data builder 108 integrates seamlessly with various data sources, including cloud platforms and on-premise databases. It supports the creation of virtual tables and views, enabling users to access and work with data without physically moving it. Additionally, it works with both in-memory cloud database 110, such as HANA, and object store 112, like HANA Data Lake Files, providing flexibility and cost efficiency in data management.

For datasets that support change data capture, the data builder 108 incorporates incremental updates, allowing users to track and manage changes to data over time. This feature is particularly valuable for maintaining up-to-date analytics in dynamic environments. The tool also supports collaborative workflows, enabling multiple users to work on data models and transformations while ensuring consistency and reusability across projects.

The data builder 108 may comprise a table editor 113. This is a tool that allows users to create, modify, and manage tables as part of their data modeling and transformation workflows. It provides an interface for defining the structure and properties of tables, enabling users to configure how data is stored, accessed, and processed.

Using the table editor 113, users can define the schema of a table, including its columns, data types, and primary keys. It allows for the specification of additional table properties, such as partitioning configurations, which can optimize query performance and data organization. The tool also supports the creation of tables that leverage different storage types, such as in-memory storage or object store, providing flexibility in how data is managed.

Additionally, the table editor 113 provides options for managing table lifecycle operations, such as deploying, modifying, or deleting tables. It ensures that changes to table structures are implemented in a controlled and consistent manner, even when data is already stored in the table. For example, it allows users to add new columns to a table with existing data while enforcing restrictions on operations that could compromise data integrity, such as dropping primary key columns.

The data warehousing environment user interface 104 further comprises a data integration monitor 114. The data integration monitor 114 is a tool designed to provide visibility and control over data integration processes. It enables users to monitor, manage, and troubleshoot data flows and transformations as they occur within the platform. By offering real-time insights into the status and performance of data integration activities, the data integration monitor 114 ensures that users can maintain the reliability and efficiency of their data pipelines.

This tool allows users to track the progress of data replication, transformation, and ingestion workflows. It provides detailed information about the execution of these processes, including their current status, completion times, and any errors or warnings encountered. This visibility helps users identify and resolve issues quickly, minimizing disruptions to data operations.

The Data Integration Monitor also supports the management of scheduled and on-demand data integration tasks. Users can view and control the execution of these tasks, such as starting, stopping, or rescheduling them as needed. This flexibility ensures that data integration processes align with organizational requirements and priorities.

In addition to monitoring individual tasks, the data integration monitor 114 provides aggregated views of data integration activities across the platform. This allows users to analyze trends, identify bottlenecks, and optimize the performance of their data workflows. The tool also integrates with other components of the data warehousing environment 102, enabling users to drill down into specific data flows or transformations for further analysis.

The data integration monitor 114 comprises a table monitor 116. The table monitor 116 is a specialized tool that provides users with detailed insights into the status and performance of table-related operations. It is designed to help users track, manage, and troubleshoot activities associated with tables, such as data ingestion, replication, and transformation, ensuring that table operations are executed efficiently and reliably.

The table monitor 116 allows users to view the current state of tables, including their data ingestion status, update frequency, and any associated transformation workflows. It provides real-time information about the progress of data being written to or read from tables, enabling users to monitor the flow of data into and out of the system. This is particularly useful for ensuring that data pipelines are functioning as expected and that tables are being populated with accurate and up-to-date information.

In addition to tracking data ingestion, the table monitor 116 provides visibility into table-specific operations, such as merge tasks, optimization processes, and change data capture (CDC) activities. For example, it can display the status of merge tasks that consolidate data from an inbound buffer into a target table or show the results of optimization tasks that improve query performance by compacting small files or reorganizing data partitions.

The tool also highlights any errors or warnings encountered during table operations, allowing users to quickly identify and address issues. For instance, if a data ingestion task fails due to schema mismatches or connectivity problems, the table monitor 116 provides diagnostic information to help users resolve the problem. This ensures that table-related workflows remain consistent and reliable. The table monitor 116 integrates seamlessly with other components of the Data Integration Monitor, enabling users to drill down into specific table operations or link them to broader data integration workflows. It also supports lifecycle management tasks, such as monitoring the deployment of new tables, tracking schema changes, or managing table deletions. By providing a centralized view of table activities, the table monitor 116 helps users maintain control over their data assets and ensures that tables are functioning as intended within the overall data landscape.

Referring now to the data warehousing environment backend service 106, this component comprises a deployer middleware 118, which is responsible for orchestrating the deployment and management of data models, transformations, and other artifacts within the data warehousing environment 102. It acts as an intermediary layer that ensures the seamless execution of deployment tasks, maintaining consistency and reliability across the platform's data management and integration processes.

The deployer middleware 118 facilitates the deployment of data models, such as tables, views, and transformation flows, by translating high-level design specifications into executable instructions for the underlying infrastructure. It ensures that these deployments are carried out in a controlled and consistent manner, adhering to the defined configurations and dependencies. This includes managing the creation, modification, and deletion of database artifacts, such as virtual tables, Delta tables, and associated metadata.

Deployer middleware 118 handles transactional deployment operations. It ensures that deployment tasks are executed atomically, meaning that either all changes are successfully applied, or none are applied in the event of an error. This guarantees the integrity of the deployed artifacts and prevents partial or inconsistent states. For example, when deploying a Local Table (File), which means storing the data on a hyperscaler, with change data capture (CDC) capabilities, the deployer middleware 118 coordinates the creation of both the virtual table in the in-memory cloud database 110 and the delta table in the object store 112, ensuring that all components are properly aligned.

The deployer middleware 118 also manages dependencies between different artifacts, ensuring that deployment sequences are executed in the correct order. For instance, it ensures that a Delta table is created in the object store 112 before its corresponding virtual table is deployed in the in-memory cloud database 110. This dependency management is helpful for maintaining the logical consistency of the data landscape.

In addition to deployment, the deployer middleware 118 supports lifecycle management tasks, such as updating existing artifacts to reflect schema changes or reconfigurations. It enforces rules to ensure that changes are applied safely, such as restricting operations that could compromise data integrity, like dropping primary key columns. The deployer middleware 118 also handles cleanup operations, such as rolling back changes or removing artifacts during undeployment, to maintain a clean and consistent environment.

The data warehousing environment backend service 106 also comprises a local table monitor backend 120, which provides the backend functionality for the table monitor 116.

The in-memory cloud database 110 is where the database artifacts are stored, but the underlying data related to the database artifacts could be stored in either the in-memory cloud database 110 or the object store 112. More particularly, an Open Table Format Structured Query Language Application Program Interface (OTF SQL API) 124 stores data definition language (DDL) objects and procedures 126 for managing one or more virtual tables 128. The virtual tables 128 represent the database artifacts for data stored in the object store 112. They are stubs that provide federated data access via the in-memory database 110 to data that is stored in a remote location, such as the external system 142.

A file adapter 130 connects the virtual tables 128 to the object store 112. The object store 112 may contain a container 132 comprising files 134 and delta tables 136.

The files 134 and delta tables 136 work in tandem to provide a robust and scalable storage solution for managing large volumes of data. The files 134 serve as the foundational storage units, capable of holding structured, semi-structured, and unstructured data in formats such as Apache Parquet. These formats are optimized for analytics and allow for efficient querying and processing of data, even at large scales. The files 134 are organized within a container 132, which acts as a logical grouping of related data assets, and they can be accessed through APIs or integrated with other components of the data warehousing environment 102.

Delta tables 136, on the other hand, are built on top of a Delta Lake storage framework and provide advanced features such as ACID transactions, schema enforcement, time travel, and change data capture (CDC). These tables are stored as a collection of files, such as Parquet files, along with a transaction log that tracks all changes made to the table. The transaction log ensures that modifications, including inserts, updates, and deletes, are applied atomically and consistently. This enables features like querying the table as it existed at a specific point in time and tracking incremental changes to the data.

The files 134 and delta tables 136 work together seamlessly. When data is written to a delta table 136, it is stored as Parquet files within the container 132, and the transaction log is updated to reflect these changes. The Delta table 136 provides a structured interface for querying the data stored in the underlying files 134, ensuring that queries return results consistent with the latest state of the table. Data ingestion into the object store 112 can occur through various mechanisms, such as replication flows, transformation flows, or direct API calls, with the ingested data being written as new Parquet files and logged in the transaction log.

Delta tables 136 also support change data capture by recording changes at the record level in the transaction log. This allows users to extract incremental updates efficiently, enabling synchronization of data across systems. Over time, maintenance tasks such as vacuuming, which removes old versions of data, and compaction, which merges smaller files into larger ones, are performed to optimize storage and query performance. These tasks ensure that the delta tables 136 remain efficient and scalable.

The integration of delta tables 136 with the data warehousing environment 102 allows users to create, manage, and query these tables through the Data warehousing environment interface. Virtual tables 128 in the in-memory cloud database 110 provide seamless access to the delta tables 136, enabling users to leverage in-memory computing for analytics while storing data cost-effectively in the object store 112. This integration ensures that users can benefit from the scalability of object store 112 while maintaining the advanced capabilities of Delta Lake for structured data management.

Spark engine 138 may be accessed through a spark adapter 140 on the in-memory cloud database 110 and may be managed by the in-memory cloud database 110. Lifecycle management and data processing of Local Table File may be orchestrated via Spark engine 138.

In an example embodiment, maintenance may be performed every so often on the delta tables 136. First, the delta table keeps historical versions of data for ACID transactions, such as if there is a need to perform roll-back or other "time travel" operations on the data. Over time, this can lead to a large amount of stale data being stored. Thus, a periodic vacuum command may be performed to remove old versions of data and free up storage space.

Additionally, if there is no need to query old versions, then it is best to clean up the old versions using the vacuum command to remove them.

Furthermore, delta tables can store data in many small files, especially after multiple merge or update operations. This can cause performance issues because each file needs to be read and written during queries. An optimize command may be used to compact small files into large ones, which improves read and write performance by reducing file fragmentation.

Additionally, if the delta table is partitioned, then over time there may be a need for partition management, especially in cases where partitions have grown large or too many partitions exist.

The data warehousing environment 102 uses a concept called spaces for secure isolation of data and for isolation of workloads. Spaces can either be configured as in-memory database spaces or file spaces. In-memory database spaces are stored and computed in the in-memory cloud database 110, whereas file spaces are stored in the object store 112 and computation on them is performed in spark engine 138.

The provisioning of each file space involves a provisioning of both an object store 112 instance and a spark engine 138 instance. Each Local Table (ile) comprises a virtual table in the in-memory cloud database 110 and a delta table in the object store 112.

The deployment of a Local Table (File) involves creating and managing the necessary database artifacts to enable the table's functionality within the system. This process ensures that the table is properly configured to store, access, and process data, whether it is stored in the object store 112 or the in-memory database 110. The deployment process is designed to maintain consistency, support advanced features like change data capture (CDC), and integrate seamlessly with the broader systems.

When deploying a Local Table (File), the system creates two primary entities: one for active records and another for handling delta records if the "Change Data Feed" feature is enabled. For tables with "Change Data Feed," the deployment process involves creating a virtual table in the cloud database to access the active records stored in the delta table in the object store. Additionally, a "delta history" table is created in the cloud database to temporarily store change data captured from the delta table. This change data may have been obtained from the underlying data source (e.g., a data lake). A dedicated procedure is also deployed to populate the delta history table with change data, and an extraction view is created to query the delta history table based on parameters such as timestamps and subscriber IDs. For Local Tables (File) without "Change Data Feed," only the virtual table is deployed.

The deployment process begins with the creation of the delta table in the object store. This table is configured to store data in an open format, such as Apache Parquet, and is managed using the Delta Lake framework. The Delta Table supports advanced features like ACID transactions, schema enforcement, and time travel, which are critical for ensuring data consistency and reliability. The delta table is created with the necessary schema, including columns, data types, and partitioning configurations if applicable.

Once the Delta Table is created, the system proceeds to create the virtual table in the cloud database. The virtual table acts as a logical representation of the delta table, allowing users to query and interact with the data stored in the object store using standard SQL commands. The virtual table is created in the corresponding schema of the cloud tenant database and is linked to the delta table through a remote source connection. This connection enables seamless access to the data stored in the object store while leveraging the in-memory computing capabilities of HANA for analytics and processing.

If the Local Table (File) includes "Change Data Feed," additional artifacts are deployed to support change data capture. The "delta history" table is created in the cloud database to store the results of the change data feed procedure. This table includes all the fields of the Local Table (File) along with metadata columns for change type, commit version, and commit timestamp. The procedure for populating the delta history table is also deployed, enabling the system to extract incremental changes from the delta table and store them in the delta history table. An extraction view is created to provide a user-friendly interface for querying the delta history table based on specific parameters.

Modeling with Local Tables (File) involves defining and managing the structure, relationships, and behavior of tables that leverage the object store as their underlying storage. This process integrates seamlessly into the broader modeling framework of the data warehousing environment, allowing users to create and manage Local Tables (File) while taking advantage of the scalability and cost-efficiency of the object store. The modeling process ensures that Local Tables (File) are optimized for analytics, support advanced features like CDC, and integrate seamlessly with other components of the platform.

The modeling process begins with the creation of a Local Table (File) in the Data Builder. Users define the schema of the table, including columns, data types, and primary keys, to structure the data appropriately for their use case. The schema definition also includes additional properties, such as partitioning configurations, which can improve query performance and data organization. Partitioning is particularly useful for large datasets, as it allows for efficient data retrieval by segmenting the data based on specific columns.

Local Tables (File) are modeled to support two key entities: active records and delta capture. The active records entity represents the current state of the data stored in the Delta Table within the object store. This entity is linked to a virtual table in the cloud database, which provides a logical interface for querying the data using SQL. The delta capture entity, on the other hand, is used to track and manage changes to the data over time. This entity leverages the "Change Data Feed" feature of Delta Tables, which records metadata such as change type, commit version, and commit timestamp. These two entities are defined during the modeling process to ensure that the Local Table (File) supports both real-time and historical data analysis.

One technical issue that arises from the ability to store the underlying data either in the open data format object storage or in the in-memory cloud storage is in the management of transformations to be performed on the data. In order to process the data, it is often desirable to perform one or more transformations on the data. These transformation(s) may include, for example, projection, filtering, aggregation, joining, unioning, calculating columns, and currency conversion. Each of these transformations may need to be performed differently based on whether the data is stored in the open data format object storage or in the in-memory cloud storage, and yet it is desirable to provide a single consistent interface for the user to generate and perform these transformations that is agnostic as to where the data is actually stored.

In an example embodiment, the data builder 108 further comprises a transformation flow editor 144. The transformation flow editor 144 is a design-time interface that enables users to model, configure, and define workflows for data transformation in a user-friendly environment. It provides a graphical interface where users can visually design transformation operations, such as joins, unions, projections, filtering, and aggregations, by connecting source tables, transformation operators, and target tables. This visual approach simplifies the representation of data flows and enhances usability.

The transformation flow editor 144 allows users to select the runtime environment for executing the transformation flow, such as the in-memory cloud database 110 (HANA) or the object storage 112. Depending on the chosen runtime, the transformation flow editor 144 adapts its features to ensure compatibility, enabling or restricting specific functionalities. For example, Spark runtime supports ANSI SQL-based transformations, and the transformation flow editor 144 validates the SQL syntax accordingly if the object store 112 is selected. Additionally, users can define custom Python-based transformations using a Python operator, which integrates libraries like Pandas and NumPy for advanced data manipulation. The transformation flow editor 144 facilitates the input of Python code, allowing users to specify a transform function that processes data as a Pandas DataFrame.

Another capability of the transformation flow editor 144 is its column mapping functionality, which lets users map the output of transformations to the columns of a target table. Users can either map to an existing table or create a new target table, with the schema automatically derived from the transformation output. The transformation flow editor 144 also supports configurations for processing data in initial load mode, which processes all data, or delta mode, which processes only changes since the last run. For delta-enabled flows, the transformation flow editor 144 integrates with watermark handling mechanisms to manage incremental updates effectively.

Validation is also part of the transformation flow editor 144, ensuring that the transformation flow is correctly configured and compatible with the selected runtime environment. It provides feedback on errors, warnings, or unsupported features, helping users refine their configurations. Once the transformation flow is modeled, the transformation flow editor 144 integrates with a transformation flow backend 146 on the data warehousing environment backend service 106 to generate runtime-specific artifacts, such as virtual procedures for Spark or SQL views HANA. It also connects to monitoring tools, such as the data integration monitor 114, enabling users to track execution status, view logs, and analyze metrics for the transformation flow.

The transformation flow backend 146 facilitates the execution, deployment, and monitoring of data transformation workflows. It acts as the intermediary between the user-defined transformation flows and the underlying runtime environments, such as HANA or Spark, ensuring seamless translation and execution of the modeled transformations.

When a transformation flow is deployed, the transformation flow backend 146 processes the user-defined configurations and generates runtime-specific artifacts. For instance, it translates the modeled view transformations into SQL code that is compatible with the selected runtime environment. In the case of Spark runtime, the transformation flow backend 146 uses a CDS-to-SQL compiler to convert the transformation definitions into Spark SQL. Additionally, the transformation flow backend 146 generates virtual procedures that encapsulate the transformation logic, including SQL queries, Python code (if applicable), and runtime-specific configurations. These virtual procedures are stored in the system and are invoked during the execution phase.

The transformation flow backend 146 also manages the lifecycle of virtual procedures. It ensures that virtual procedures are created during deployment, updated when transformation flows are modified, and deleted when the corresponding transformation flows are removed. This lifecycle management is tightly coupled with the transformation flow itself, maintaining consistency and traceability across the system.

The transformation flow backend 146 also integrates with local table monitor backend 120. It logs execution metrics, such as a number of records processed, and tracks the status of asynchronous tasks. In the event of errors or failures, the transformation flow backend 146 provides detailed logs and metrics to assist in debugging and root cause analysis. Additionally, it supports cancellation of running transformation flows by aborting the corresponding database sessions or Spark jobs.

The transformation flow runtime 148 operates within the in-memory cloud database 110 to execute data transformation workflows efficiently. It some example embodiment, the transformation flow runtime 148 is a transformation flow HANA runtime. It leverages the advanced processing capabilities of the in-memory cloud database 110 to perform SQL-based transformations on structured data stored in relational tables. This runtime is specifically designed to handle transformation flows that use HANA as their execution environment, ensuring high performance and seamless integration with the database's native features.

After a transformation flow is deployed, when it runs, the transformation flow runtime 148 receives the transformation definitions from the transformation flow backend 146. These definitions include SQL queries, metadata, and configurations for the transformation flow. The transformation flow runtime 148 uses this information to create SQL procedures that encapsulate the transformation logic. These procedures are stored within the in-memory cloud database 110 and are invoked during the execution phase. More specifically, during deployment, a SQL view may be created in the HANA database. Then during runtime, the transformation flow runtime 148 reads from this view and writes the results to the target table. In a SPARK runtime, during deployment a virtual procedure is generated that contains the pyspark code and during run the virtual procedure is executed, which creates the SPARK job.

During execution, the transformation flow runtime 148 processes the transformation flow by interacting directly with the relational tables in the in-memory cloud database 110. It reads data from the source tables, applies the defined transformation operations-such as joins, unions, projections, filtering, and aggregations-and writes the results to the target tables. The runtime 148 ensures that these operations are performed efficiently by leveraging the database's in-memory processing capabilities, which provide high-speed data access and computation.

The transformation flow runtime 148 also supports monitoring and logging during execution. It tracks metrics such as the number of records processed, execution time, and resource utilization. These metrics are logged and made available to the monitoring framework, allowing users to analyze the performance of the transformation flow and troubleshoot any issues that arise. In addition, the transformation flow runtime 148 provides mechanisms for error handling and task cancellation. If an error occurs during execution, the runtime logs detail information to assist in debugging. Users can also cancel running transformation flows, which aborts the corresponding SQL procedures and terminates the execution process.

On the Spark engine 138, a transformation flow spark job 150 begins by reading data from the source tables or files, which are typically stored in local table files (LTFs) within the object store 112. The transformation flow spark job 150 then creates temporary views in Spark 138 to represent the filtered data, which are used as inputs for the transformation operations.

The transformation flow spark job 150 applies the transformation logic defined in the virtual procedure. This includes executing Spark SQL queries to perform operations such as joins, unions, projections, filtering, and aggregations. If the transformation flow includes a Python operator, the transformation flow spark job 150 invokes the user-defined Python code using the MapInPandas function, which processes the data in batches as Pandas DataFrames. The transformed data is then written to the target table or file, completing the transformation process.

The transformation flow spark job 150 also supports task cancellation. If a user cancels a running transformation flow, the corresponding Spark job is terminated, ensuring that system resources are freed and no partial writes occur. Additionally, the job handles rollback scenarios to maintain data consistency in case of errors during execution.

Deployment of the Spark runtime involves a series of steps that prepare the transformation flow for execution in a distributed computing environment. This process is managed by the transformation flow backend 146 and results in the creation of runtime-specific artifacts, such as virtual procedures, that encapsulate the transformation logic. The deployment ensures that the transformation flow is properly configured to leverage the capabilities of Apache Spark for processing large-scale data stored in file-based systems like local table files (LTFs). Below is an explanation of how deployment works on the Spark runtime.

The deployment process begins with the transformation flow backend 146 translating the modeled view transformations into Spark SQL. This translation is performed using a CDS-to-SQL compiler, which converts the transformation definitions into SQL syntax that is compliant with Spark's ANSI SQL standards. The generated Spark SQL includes operations such as joins, unions, projections, filtering, and aggregations, tailored to the specific requirements of the transformation flow.

Once the Spark SQL is generated, the backend creates a virtual procedure in the in-memory cloud database 110. This virtual procedure serves as the execution artifact for the transformation flow and contains the Spark SQL code along with additional logic derived from the transformation flow's configuration. If the transformation flow includes a Python operator, the backend injects the user-defined Python code into the virtual procedure. This Python code is wrapped in a function that processes data as Pandas DataFrames, enabling advanced data manipulation during execution.

The procedure is stored in the system and is associated with the transformation flow. It follows a naming convention that ensures traceability and consistency across deployments. The lifecycle of the procedure is tightly coupled with the transformation flow, meaning it is created during deployment, updated when the transformation flow is modified, and deleted when the transformation flow is removed.

The procedure serves as a critical execution artifact within the transformation flow system, encapsulating the transformation logic and enabling seamless execution across various runtime environments, including Spark and the in-memory cloud database 110. It acts as a bridge between the user-defined transformation flow and the underlying runtime, ensuring that the specified transformations are executed efficiently and accurately.

For Spark runtime, a virtual procedure triggers a Spark job to execute the transformation logic in a distributed computing environment. The virtual procedure reads data from source tables or files, applies the defined transformations, and writes the results to the target tables or files. In delta-enabled transformation flows, the virtual procedure interacts with the watermark management system to filter the change data feed (CDF) of the delta table, ensuring that only modified records are processed. Temporary views may be created in Spark to represent the filtered data, which are then used as inputs for the transformation operations.

If Python logic is included, the virtual procedure invokes the user-defined Python code using Spark's MapInPandas function. This function processes data in batches as Pandas DataFrames, applying the Python logic to transform the data. The output of the Python operator is then integrated into the overall transformation workflow, ensuring that the results are written to the target table or file.

Designed to adapt to different runtime environments, the virtual procedure executes SQL procedures directly within the in-memory cloud database 110 for HANA runtime, while triggering distributed Spark jobs for Spark runtime. This adaptability ensures that the transformation flow system can handle diverse storage and processing requirements seamlessly, making the virtual procedure a versatile and robust component of the overall architecture.

In addition to creating the virtual procedure, the deployment process stores the transformation flow's metadata and configuration in the repository. This includes the JSON definition of the transformation flow, which contains details such as runtime settings, load type (initial or delta), and column mappings. The metadata is saved in the space tech schema table (DEPLOYED_METADATA) within the in-memory cloud database 110.

The deployment process also includes validation steps to ensure the correctness of the generated artifacts. The Spark SQL is validated to confirm compliance with Spark's syntax and capabilities. If any errors or unsupported features are detected, the deployment process provides feedback to the user, allowing them to refine the transformation flow before redeployment.

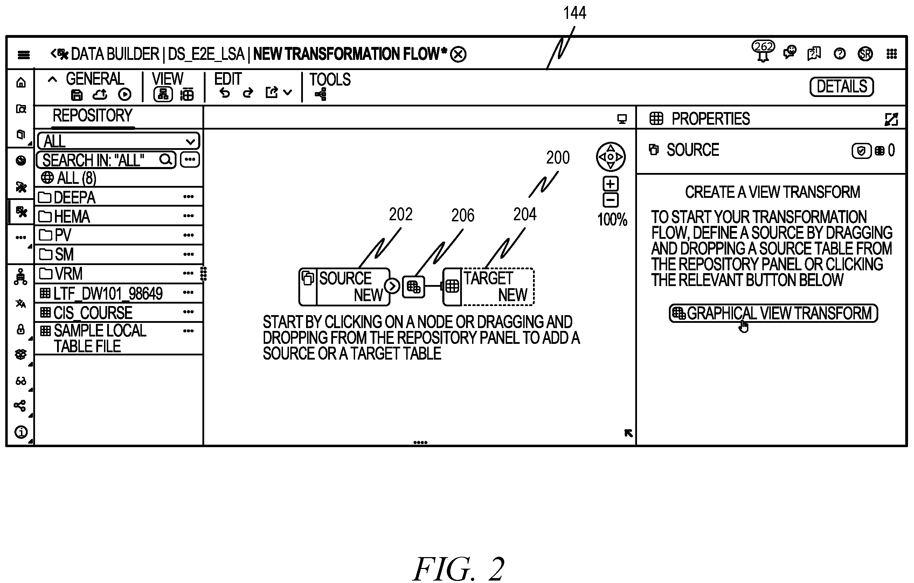

Figure 2 is a screen capture of a first screen of the transformation flow editor 144, in accordance with an example embodiment. Here, a graphical user interface is provided for a user to create a transformation flow. Specifically, the user can utilize design area 200 to drag and drop source and target data as well as to define transformations. Here, the user can drag and drop source data into source data block 202. The user can drag and drop target data into target data block 204. The user can then define a transformation 206 between the source data block 202 and the target data block.

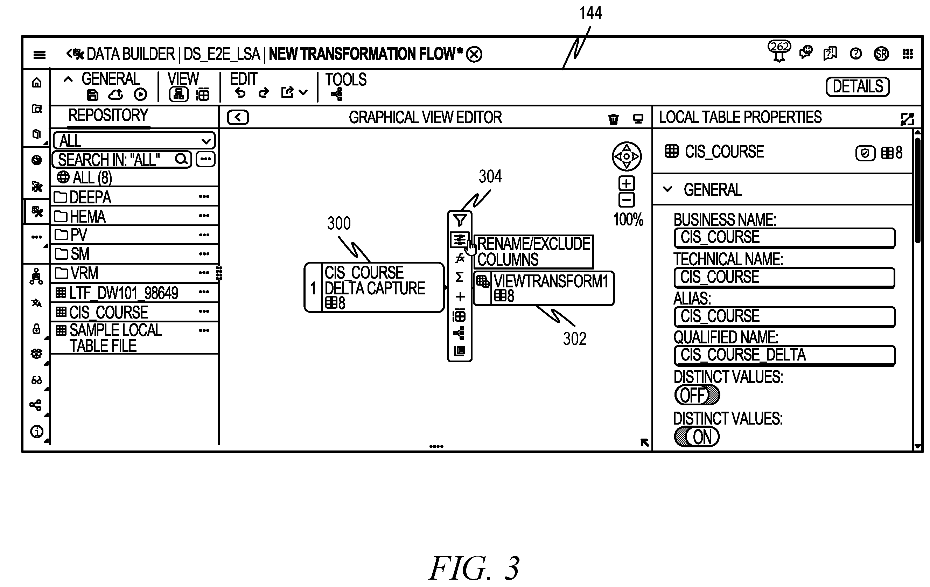

Figure 3 is a screen capture of a second screen of a transformation flow editor 144, in accordance with an example embodiment. Here, the user has defined source data 300 and target data 302, and a transformation selection bar 304 pops up where the user can select one of many different types of transformations, each corresponding to a different graphical symbol.

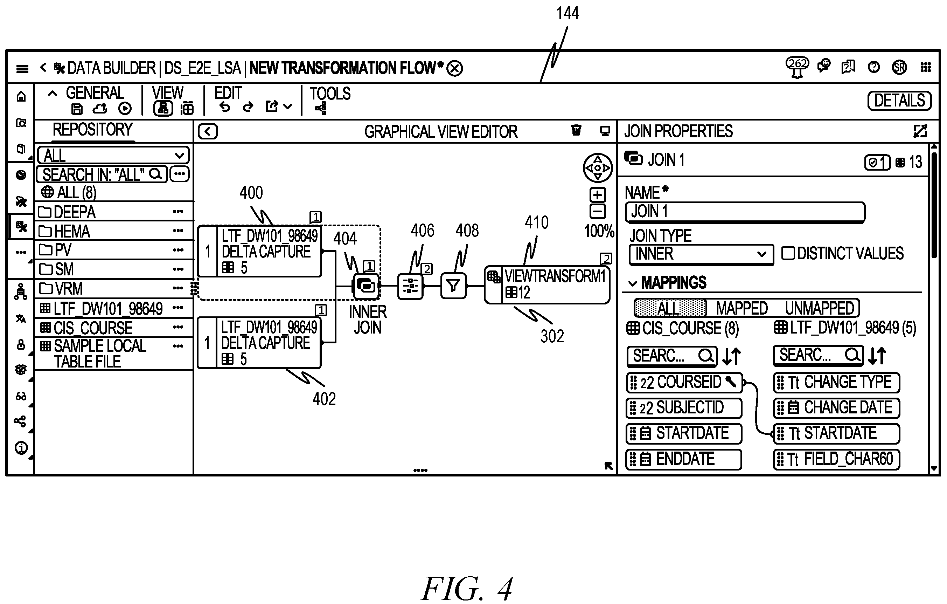

It should be noted that while Figure 2 and Figure 3 depict simple cases where there is a single transformation between two pieces of data, the user can define more complex transformation flows involving multiple transformations and many different pieces of data. Figure 4 is a screen capture of a third screen of a transformation flow editor 144, in accordance with an example embodiment. Here, the user has defined two pieces of source data, source data 400 and source data 402, as well as transformation 404, transformation 406, and transformation 408, and target data 410.

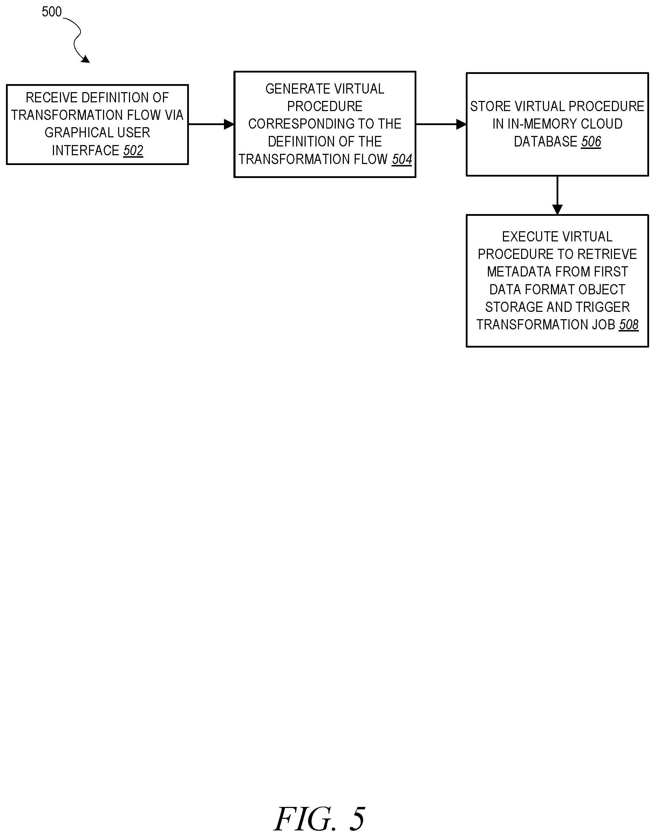

Figure 5 is a flow diagram illustrating a method 500 for applying one or more transformations to data, in accordance with an example embodiment. The method comprises a series of operations denoted by reference numbers. While the various operations in this flowchart are presented and described sequentially, one of ordinary skill in the art will appreciate that some or all of the operations may be executed in a different order, be combined or omitted, or be executed in parallel.

At operation 502, the method includes receiving, via a graphical user interface, a definition of a transformation flow. The transformation flow specifies operations to transform source data into target data, where the source data and target data are stored in a first format object storage within a data lake. The graphical user interface may allow users to define the transformation flow by specifying the source and target data, as well as the transformation operations to be applied. In some implementations, the first format object storage may be implemented as an open data format object storage.

At operation 504, the method involves generating a virtual procedure corresponding to the definition of the transformation flow. The virtual procedure includes logic to execute the transformation flow and is configured to operate in a runtime environment. The virtual procedure may include instructions for initializing source data, applying transformation logic, and writing the results to the target data.

At operation 506, the virtual procedure is stored in an in-memory cloud database. The in-memory cloud database provides a centralized location for managing the virtual procedure, ensuring it is accessible for execution. The virtual procedure may be stored with a naming convention that facilitates traceability and consistency across deployments.

At operation 508, the virtual procedure is executed. The execution causes retrieval of metadata from the first format object storage and triggers a transformation job on a computing cluster. The transformation job reads the source data from the first format object storage, applies one or more transformations specified in the definition of the transformation flow, and writes the results to the target data in the first format object storage.

The method 500 concludes with the transformed target data being stored in the open data format object storage, ready for further use or analysis. The described operations provide a structured approach to transforming and managing data.

In view of the above-described implementations of subject matter this application discloses the following list of examples, wherein one feature of an example in isolation or more than one feature of an example, taken in combination and, optionally, in combination with one or more features of one or more further examples are further examples also falling within the disclosure of this application.

Example 1 is a system comprising: at least one hardware processor; a non-transitory computer-readable medium storing instructions that, when executed by the at least one hardware processor, cause the at least one hardware processor to perform operations comprising: receiving, via a graphical user interface, a definition of a transformation flow between source data and target data, the source data and the target data being data from a data lake that is stored in a first format object storage: generating a virtual procedure corresponding to the definition of the transformation flow; storing the virtual procedure in an in-memory cloud database; and executing the virtual procedure, causing retrieval of metadata from the first format object storage and triggering a transformation job on a computing cluster, the transformation job reading the source data from the first format object storage, applying one or more transformations specified in the definition of the transformation flow, and writing results to the target data in the first format object storage.

In Example 2, the subject matter of Example 1 comprises, wherein the virtual procedure further comprises Python code for performing non-Structured Query Language (SQL)-based transformations, the Python code being executed using a distributed computing framework.

In Example 3, the subject matter of Examples 1-2 comprises, wherein the first format object storage is an open data format object storage, and wherein the transformation flow comprises one or more operations comprise filtering, aggregating, merging, or projecting data in the source data.

In Example 4, the subject matter of Examples 1-3 comprises, wherein the source data is a delta table.

In Example 5, the subject matter of Examples 1-4 comprises, wherein the target data is a delta table.

In Example 6, the subject matter of Examples 1-5 comprises, wherein the graphical user interface provides a drag-and-drop interface for defining the transformation flow, comprising specifying the source data, target data, and transformation operations.

In Example 7, the subject matter of Examples 1-6 comprises, wherein the system further comprises a monitoring framework configured to track execution metrics of the transformation flow, comprising a number of records processed and execution time.

Example 8 is a method comprising: receiving, via a graphical user interface, a definition of a transformation flow between source data and target data, the source data and the target data being data from a data lake that is stored in an a first format object storage: generating a virtual procedure corresponding to the definition of the transformation flow; storing the virtual procedure in an in-memory cloud database; and executing the virtual procedure, causing retrieval of metadata from the first format object storage and triggering a transformation job on a computing cluster, the transformation job reading the source data from the first format object storage, applying one or more transformations specified in the definition of the transformation flow, and writing results to the target data in the first format object storage.

In Example 9, the subject matter of Example 8 comprises, wherein the virtual procedure further comprises Python code for performing non-Structured Query Language (SQL)-based transformations, the Python code being executed using a distributed computing framework.

In Example 10, the subject matter of Examples 8-9 comprises, wherein the first format object storage is an open data format object storage, and wherein the transformation flow comprises one or more operations comprise filtering, aggregating, merging, or projecting data in the source data.

In Example 11, the subject matter of Examples 8-10 comprises, wherein the source data is a delta table.

In Example 12, the subject matter of Examples 8-11 comprises, wherein the target data is a delta table.

In Example 13, the subject matter of Examples 8-12 comprises, wherein the graphical user interface provides a drag-and-drop interface for defining the transformation flow, comprising specifying the source data, target data, and transformation operations.

In Example 14, the subject matter of Examples 8-13 comprises, using a monitoring framework configured to track execution metrics of the transformation flow, comprising a number of records processed and execution time.

Example 15 is a non-transitory machine-readable medium storing instructions which, when executed by one or more processors, cause the one or more processors to perform operations comprising: receiving, via a graphical user interface, a definition of a transformation flow between source data and target data, the source data and the target data being data from a data lake that is stored in a first format object storage: generating a virtual procedure corresponding to the definition of the transformation flow; storing the virtual procedure in an in-memory cloud database; and executing the virtual procedure, causing retrieval of metadata from the first format object storage and triggering a transformation job on a computing cluster, the transformation job reading the source data from the first format object storage, applying one or more transformations specified in the definition of the transformation flow, and writing results to target data in the first format object storage.

In Example 16, the subject matter of Example 15 comprises, wherein the virtual procedure further comprises Python code for performing non-Structured Query Language (SQL)-based transformations, the Python code being executed using a distributed computing framework.

In Example 17, the subject matter of Examples 15-16 comprises, wherein the first format object storage is an open data format object storage, and wherein the transformation flow comprises one or more operations comprise filtering, aggregating, merging, or projecting data in the source data.

In Example 18, the subject matter of Examples 15-17 comprises, wherein the source data is a delta table.

In Example 19, the subject matter of Examples 15-18 comprises, wherein the target data is a delta table.

In Example 20, the subject matter of Examples 15-19 comprises, wherein the graphical user interface provides a drag-and-drop interface for defining the transformation flow, comprising specifying the source data, target data, and transformation operations.

Example 21 is at least one machine-readable medium comprising instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

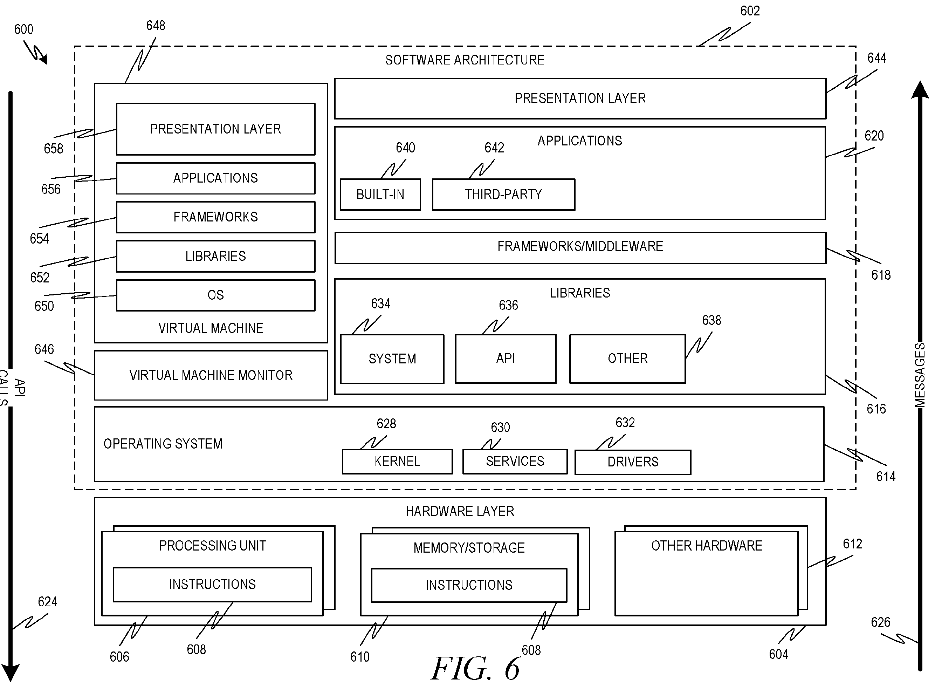

Figure 6 shows a block diagram 600 showing one example of a software architecture 602 for a computing device. The software architecture 602 may be used in conjunction with various hardware architectures, for example, as described herein. Figure 6 is merely a non-limiting example of a software architecture, and many other architectures may be implemented to facilitate the functionality described herein. A representative hardware layer 604 is illustrated and can represent, for example, any of the above referenced computing devices. In some example embodiments, the hardware layer 604 may be implemented according to the architecture of the computer system of Figure 6.

The representative hardware layer 604 comprises one or more processing units 606 having associated executable instructions 608. Executable instructions 608 represent the executable instructions of the software architecture 602, including implementation of the methods, modules, subsystems, and components, and so forth described herein and may also include memory and/or storage modules 610, which also have executable instructions 608. Hardware layer 604 may also comprise other hardware 612 which represents any other hardware of the hardware layer 604. Examples of the other hardware 612 include the hardware components shown in Figure 6.

In the example architecture of Figure 6, the software architecture 602 may be conceptualized as a stack of layers where each layer provides particular functionality. For example, the software architecture 602 may include layers such as an operating system 614, libraries 616, frameworks/middleware 618, applications 620, and presentation layer 644. Operationally, the applications 620 and/or other components within the layers may invoke API calls 624 through the software stack and access a response, returned values, and so forth illustrated as messages 626 in response to the API calls 624. The layers illustrated are representative in nature and not all software architectures have all layers. For example, some mobile or special purpose operating systems may not provide a frameworks/middleware 618 layer, while others may provide such a layer. Other software architectures may include additional or different layers.

The operating system 614 may manage hardware resources and provide common services. The operating system 614 may include, for example, a kernel 628, services 630, and drivers 632. The kernel 628 may act as an abstraction layer between the hardware and the other software layers. For example, the kernel 628 may be responsible for memory management, processor management (e.g., scheduling), component management, networking, security settings, and so on. The services 630 may provide other common services for the other software layers. In some examples, the services 630 include an interrupt service. The interrupt service may detect the receipt of an interrupt and, in response, cause the software architecture 602 to pause its current processing and execute an interrupt service routine (ISR) when an interrupt is accessed.

The drivers 632 may be responsible for controlling or interfacing with the underlying hardware. For instance, the drivers 632 may include display drivers, camera drivers, Bluetooth^{®} drivers, flash memory drivers, serial communication drivers (e.g., Universal Serial Bus (USB) drivers), Wi-Fi^{®} drivers, NFC drivers, audio drivers, power management drivers, and so forth depending on the hardware configuration.

The libraries 616 may provide a common infrastructure that may be utilized by the applications 620 and/or other components and/or layers. The libraries 616 typically provide functionality that allows other software modules to perform tasks in an easier fashion than to interface directly with the underlying operating system 614 functionality (e.g., kernel 628, services 630 and/or drivers 632). The libraries 616 may include system libraries 634 (e.g., C standard library) that may provide functions such as memory allocation functions, string manipulation functions, mathematic functions, and the like. In addition, the libraries 616 may include API libraries 636 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 616 may also include a wide variety of other libraries 638 to provide many other APIs to the applications 620 and other software components/modules.

The frameworks/middleware 618 may provide a higher-level common infrastructure that may be utilized by the applications 620 and/or other software components/modules. For example, the frameworks/middleware 618 may provide various graphic user interface (GUI) functions, high-level resource management, high-level location services, and so forth. The frameworks/middleware 618 may provide a broad spectrum of other APIs that may be utilized by the applications 620 and/or other software components/modules, some of which may be specific to a particular operating system or platform.

The applications 620 include built-in applications 640 and/or third-party applications 642. Examples of representative built-in applications 640 may include, but are not limited to, a contacts application, a browser application, a book reader application, a location application, a media application, a messaging application, and/or a game application. Third-party applications 642 may include any of the built-in applications as well as a broad assortment of other applications. In a specific example, the third-party application 642 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 642 may invoke the API calls 624 provided by the mobile operating system such as operating system 614 to facilitate functionality described herein.

The applications 620 may utilize built-in operating system functions (e.g., kernel 628, services 630 and/or drivers 632), libraries (e.g., system libraries 634, API libraries 636, and other libraries 638), and frameworks/middleware 618 to create user interfaces to interact with users of the system. Alternatively, or additionally, in some systems, interactions with a user may occur through a presentation layer, such as presentation layer 644. In these systems, the application/module "logic" can be separated from the aspects of the application/module that interact with a user.

Some software architectures utilize virtual machines. In the example of Figure 6, this is illustrated by virtual machine 648. A virtual machine creates a software environment where applications/modules can execute as if they were executing on a hardware computing device. A virtual machine is hosted by a host operating system (operating system 614) and typically, although not always, has a virtual machine monitor 646, which manages the operation of the virtual machine 648 as well as the interface with the host operating system (i.e., operating system 614). A software architecture executes within the virtual machine 648 such as an operating system 650, libraries 652, frameworks/middleware 654, applications 656 and/or presentation layer 658. These layers of software architecture executing within the virtual machine 648 can be the same as corresponding layers previously described or may be different.

### MODULES, COMPONENTS AND LOGIC

A computer system may include logic, components, modules, mechanisms, or any suitable combination thereof. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. One or more computer systems (e.g., a standalone, client, or server computer system) or one or more hardware processors may be configured by software (e.g., an application or application portion) as a hardware-implemented module that operates to perform certain operations as described herein.

A hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Hardware-implemented modules may be temporarily configured (e.g., programmed), and each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiples of such hardware-implemented modules exist contemporaneously, communications may be achieved through signal transmission (e.g., over appropriate circuits and buses that connect the hardware-implemented modules). Multiple hardware-implemented modules are configured or instantiated at different times. Communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. The processor or processors may be located in a single location (e.g., within a home environment, an office environment, or a server farm), or the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

### ELECTRONIC APPARATUS AND SYSTEM

The systems and methods described herein may be implemented using digital electronic circuitry, computer hardware, firmware, software, a computer program product (e.g., a computer program tangibly embodied in an information carrier, e.g., in a machine-readable medium for execution by, or to control the operation of, data processing apparatus, e.g., a programmable processor, a computer, or multiple computers), or any suitable combination thereof.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites (e.g., cloud computing) and interconnected by a communication network. In cloud computing, the server-side functionality may be distributed across multiple computers connected by a network. Load balancers are used to distribute work between the multiple computers. Thus, a cloud computing environment performing a method is a system comprising the multiple processors of the multiple computers tasked with performing the operations of the method.

Operations may be performed by one or more programmable processors executing a computer program to perform functions by operating on input data and generating output. Method operations can also be performed by, and apparatus of systems may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. A programmable computing system may be deployed using hardware architecture, software architecture, or both. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out example hardware (e.g., machine) and software architectures that may be deployed.

### EXAMPLE MACHINE ARCHITECTURE AND MACHINE-READABLE MEDIUM

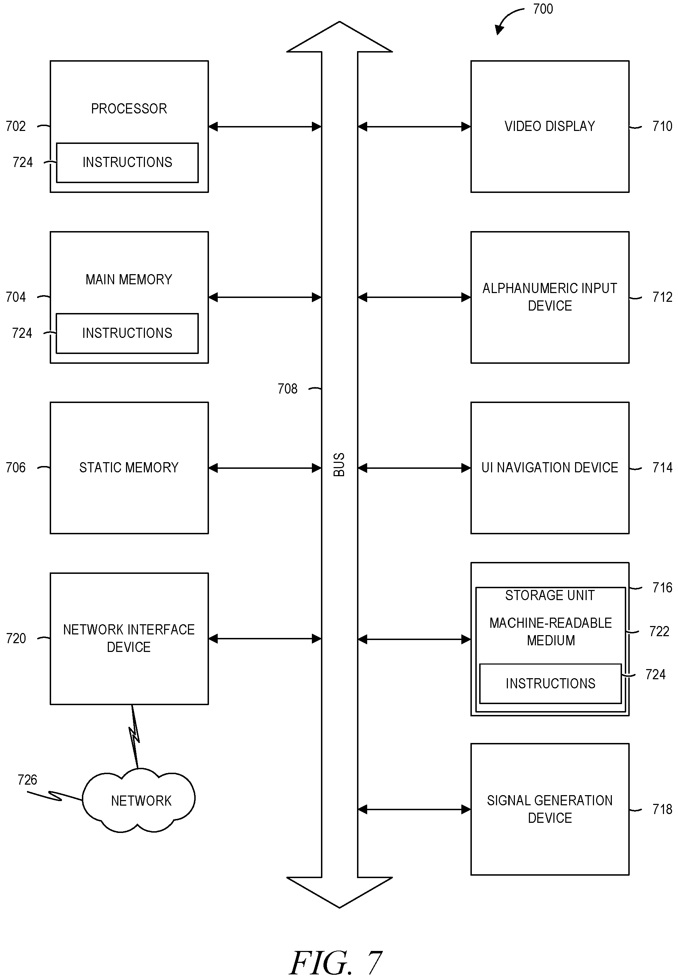

Figure 7 shows a block diagram of a machine in the example form of a computer system 700 within which instructions 724 may be executed for causing the machine to perform any one or more of the methodologies discussed herein. The machine may operate as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 700 includes a processor 702 (e.g., a central processing unit (CPU), a graphics processing unit (GPU), or both), a main memory 704, and a static memory 706, which communicate with each other via a bus 708. The computer system 700 may further include a video display unit 710 (e.g., a liquid crystal display (LCD) or a cathode ray tube (CRT)). The computer system 700 also includes an alphanumeric input device 712 (e.g., a keyboard or a touch-sensitive display screen), a user interface (UI) navigation (or cursor control) device 714 (e.g., a mouse), a storage unit 716, a signal generation device 718 (e.g., a speaker), and a network interface device 720.

### MACHINE-READABLE MEDIUM

The storage unit 716 includes a machine-readable medium 722 on which is stored one or more sets of data structures and instructions 724 (e.g., software) embodying or utilized by any one or more of the methodologies or functions described herein. The instructions 724 may also reside, completely or at least partially, within the main memory 704 and/or within the processor 702 during execution thereof by the computer system 700, with the main memory 704 and the processor 702 also constituting a machine-readable medium 722.

While the machine-readable medium 722 is shown in Figure 7 to be a single medium, the term "machine-readable medium" may include a single medium or multiple media (e.g., a centralized or distributed database, and/or associated caches and servers) that store the one or more instructions 724 or data structures. The term "machine-readable medium" shall also be taken to include any tangible medium that is capable of storing, encoding, or carrying instructions 724 for execution by the machine and that cause the machine to perform any one or more of the methodologies of the present disclosure, or that is capable of storing, encoding, or carrying data structures utilized by or associated with the instructions 724. The term "machine-readable medium" shall accordingly be taken to include, but not be limited to, solid-state memories, and optical and magnetic media. Specific examples of machine-readable media include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and compact disc read-only memory (CD-ROM) and digital versatile disc read-only memory (DVD-ROM) disks. A machine-readable medium is not a transmission medium.

### TRANSMISSION MEDIUM

The instructions 724 may further be transmitted or received over a communications network 726 using a transmission medium. The instructions 724 may be transmitted using the network interface device 720 and any one of a number of well-known transfer protocols (e.g., hypertext transport protocol (HTTP)). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 724 for execution by the machine, and includes digital or analog communications signals or other intangible media to facilitate communication of such software.

Although specific examples are described herein, it will be evident that various modifications and changes may be made to these examples without departing from the broader spirit and scope of the disclosure. Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. Finally, as used herein, the conjunction "or" refers to a non-exclusive "or," unless specifically stated otherwise.

## Claims

1. A system comprising:
at least one hardware processor;
a non-transitory computer-readable medium storing instructions that, when executed by the at least one hardware processor, cause the at least one hardware processor to perform operations comprising:
receiving, via a graphical user interface, a definition of a transformation flow between source data and target data, the source data and the target data being data from a data lake that is stored in a first format object storage:
generating a virtual procedure corresponding to the definition of the transformation flow;
storing the virtual procedure in an in-memory cloud database; and
executing the virtual procedure, causing retrieval of metadata from the first format object storage and triggering a transformation job on a computing cluster, the transformation job reading the source data from the first format object storage, applying one or more transformations specified in the definition of the transformation flow, and writing results to the target data in the first format object storage.

2. The system of claim 1, wherein the virtual procedure further comprises Python code for performing non-Structured Query Language (SQL)-based transformations, the Python code being executed using a distributed computing framework.

3. The system of claim 1 or 2, wherein the first format object storage is an open data format object storage, and wherein the transformation flow comprises one or more operations include filtering, aggregating, merging, or projecting data in the source data.

4. The system of any of the preceding claims, wherein
the source data is a delta table, and/or
the target data is a delta table.

5. The system of any of the preceding claims, wherein
the graphical user interface provides a drag-and-drop interface for defining the transformation flow, including specifying the source data, target data, and transformation operations, and/or
the system further comprises a monitoring framework configured to track execution metrics of the transformation flow, including a number of records processed and execution time.

6. A method comprising:
receiving, via a graphical user interface, a definition of a transformation flow between source data and target data, the source data and the target data being data from a data lake that is stored in an a first format object storage:
generating a virtual procedure corresponding to the definition of the transformation flow;
storing the virtual procedure in an in-memory cloud database; and
executing the virtual procedure, causing retrieval of metadata from the first format object storage and triggering a transformation job on a computing cluster, the transformation job reading the source data from the first format object storage, applying one or more transformations specified in the definition of the transformation flow, and writing results to the target data in the first format object storage.

7. The method of claim 6, wherein
the virtual procedure further comprises Python code for performing non-Structured Query Language (SQL)-based transformations, the Python code being executed using a distributed computing framework, and/or
the first format object storage is an open data format object storage, and wherein the transformation flow comprises one or more operations comprise filtering, aggregating, merging, or projecting data in the source data.

8. The method of claim 6 or 7, wherein
the source data is a delta table, and/or
the target data is a delta table.

9. The method of any one of claims 6 to 8, wherein the graphical user interface provides a drag-and-drop interface for defining the transformation flow, including specifying the source data, target data, and transformation operations.

10. The method of any one of claims 6 to 9, further comprising using a monitoring framework configured to track execution metrics of the transformation flow, including a number of records processed and execution time.

11. A non-transitory machine-readable medium storing instructions which, when executed by one or more processors, cause the one or more processors to perform operations comprising:
receiving, via a graphical user interface, a definition of a transformation flow between source data and target data, the source data and the target data being data from a data lake that is stored in a first format object storage:
generating a virtual procedure corresponding to the definition of the transformation flow;
storing the virtual procedure in an in-memory cloud database; and
executing the virtual procedure, causing retrieval of metadata from the first format object storage and triggering a transformation job on a computing cluster, the transformation job reading the source data from the first format object storage, applying one or more transformations specified in the definition of the transformation flow, and writing results to target data in the first format object storage.

12. The non-transitory machine-readable medium of claim 11, wherein
the virtual procedure further includes Python code for performing non-Structured Query Language (SQL)-based transformations, the Python code being executed using a distributed computing framework, and/or
the first format object storage is an open data format object storage, and wherein the transformation flow comprises one or more operations include filtering, aggregating, merging, or projecting data in the source data.

13. The non-transitory machine-readable medium of claim 11 or 12, wherein the source data is a delta table.

14. The non-transitory machine-readable medium of any one of claims 11 to 13, wherein the target data is a delta table.

15. The non-transitory machine-readable medium of any one of claims 11 to 14, wherein the graphical user interface provides a drag-and-drop interface for defining the transformation flow, including specifying the source data, target data, and transformation operations.
